# EUROPÄISCHE PATENTSCHRIFT

(11) **EP 2 834 715 B1**
(45) Veröffentlichungstag und Bekanntmachung des Hinweises auf die Patenterteilung: **25.05.2016**
(21) Anmeldenummer: 13715666.7
(22) Anmeldetag: 05.04.2013
(51) Int. Cl.: G05B 19/409, B25J 9/16

(54) **VERFAHREN ZUR BEDIENUNG EINES INDUSTRIEROBOTERS**
METHOD FOR OPERATING AN INDUSTRIAL ROBOT
PROCÉDÉ POUR COMMANDER UN ROBOT INDUSTRIEL

(30) Priorität: 05.04.2012 DE 102012103031
(43) Veröffentlichungstag der Anmeldung: 11.02.2015
(73) Patentinhaber: Reis Group Holding GmbH & Co. KG, 63785 Obernburg (DE)
(72) Erfinder: SOM, Franz, 64750 Lützelbach (DE)
(74) Vertreter: Stoffregen, Hans-Herbert
(86) Internationale Anmeldenummer: PCT/EP2013/057187
(87) Internationale Veröffentlichungsnummer: WO 2013/150134

(56) Entgegenhaltungen:
- DE-A1- 10 303 793
- JP-A- H10 146 782
- US-A1- 2009 289 591
- SONICWAVEZOR: "Using iPod Touch to control NASA Robot over wifi", INTERNET CITATION, 24. März 2010 (2010-03-24), Seite 1, XP002653593, Gefunden im Internet: URL:http://www.youtube.com/watch?v=4XQeZE4 nh6M [gefunden am 2011-07-27]
- Martin Edberg ET AL: "Implementing Multi-Touch Screen for Real-time Control of a Robotic cell At Universidad Politécnica de Valencia", , 31. Dezember 2010 (2010-12-31), XP055069550, Göteborg, Sweden Gefunden im Internet: URL:http://publications.lib.chalmers.se/re cords/fulltext/126887.pdf [gefunden am 2013-07-04]
- Christoph Niederhuber: "Bedienpanel: Multitouch-Technologie mit haptischen Elementen vereint", Fertigungs- & Maschinenautomation, 29. Februar 2012 (2012-02-29), XP055069655, etz Gefunden im Internet: URL:http://www.etz.de/files/e20223zfe_keba .pdf [gefunden am 2013-07-04] in der Anmeldung erwähnt

## Beschreibung

Die Erfindung bezieht sich auf ein Verfahren zur Bedienung eines Industrieroboters mittels eines Bediengerätes, umfassend den Verfahrensschritt des Berührens eines virtuellen Bedienelementes auf einem berührungsempfindlichen von einem Rahmen umgebenen Display eines grafischen Bediener-Interfaces, wobei bei Berühren des virtuellen Bedienelementes eine dem Bedienelement zugeordnete Funktion ausgelöst wird, wobei wahlweise Geschwindigkeit oder Strecke einer Auslenkung eines Fingers einer Bedienperson bei Berührung des als definierte Verfahrfläche ausgebildeten virtuellen Bedienelementes des Touch-Displays erfasst wird, und aus der Geschwindigkeit oder der Strecke der Auslenkung ein Steuersignal generiert wird, welches zur Geschwindigkeitsvorgabe oder Positionsvorgabe für Bewegungen des Industrieroboters verwendet wird.

Eine Vorrichtung zum Steuern eines Industrieroboters in Form eines Handbediengerätes ist in der DE 10 2010 039 540 A1 beschrieben. Das Handbediengerät kann mit einer Robotersteuerung gekoppelt werden, um den Industrieroboter zu programmieren bzw. zu steuern.

Das Handbediengerät umfasst eine Elektronik mit Mikroprozessor, um mit der Robotersteuerung kommunizieren zu können. Ferner weist das Handbediengerät eine als Touchscreen ausgebildete Anzeige, eine Not-Aus-Taste und einen als Schloss ausgebildeten Umschalter auf. Zur manuellen Bewegung z.B. eines Roboterarms umfasst das Handbediengerät verschiedene, voneinander unabhängig manuell betätigbare Eingabemittel bzw. Verfahrmittel, die z.B. als 6D-Maus oder als Tipp-Tasten ausgebildet sind. Mittels des Touchscreens besteht die Möglichkeit, jedem der Verfahrmittel ihr eigenes Bezugskoordinatensystem zuzuordnen.

Bei der bekannten Ausführungsform erfolgt die Steuerung des Industrieroboters jedoch ausschließlich über die manuell betätigbaren Eingabemittel, so dass das Handbediengerät in seiner Herstellung aufwendig und im Betrieb anfällig ist.

Eine weitere Vorrichtung zur Bedienung eines Industrieroboters ist in der DE 10 2010 025 781 A1 beschrieben. Das Handgerät in Form eines mobilen Telefons weist ein Touchscreen auf, der einerseits als Ausgabemittel zum Ausgeben von Informationen von der Robotersteuerung, insbesondere zur Darstellung einer Bedienoberfläche, und andererseits als Befehlseingabemittel zum Eingeben von Steuerbefehlen mittels Tasten dient.

Das Handgerät ist mittels einer Klemmeinrichtung, wie diese im Prinzip beispielsweise von Halterung für mobile Telefone in Kraftfahrzeugen bekannt ist, lösbar an einer tragbaren Sicherheitseinrichtung befestigt und mit dieser über eine USB-Schnittstelle verbunden. Die Sicherheitseingabeeinrichtung weist einen Not-Halt-Knopf, einen Zustimm-Taster sowie einen Betriebsarten-Wahlschalter auf. Nachteilig bei dieser Ausführungsform ist, dass eine Bedienperson zur sicheren Bedienung der virtuellen Tasten stets gezwungen ist, auf das Touchscreen zu blicken, um Fehleingaben zu vermeiden. Gleiches gilt bei widrigen Umgebungsbedingungen wie beispielsweise starkem Lichteinfall oder Dunkelheit, die eine Bedienung des Touchscreens erschweren würden.

In der Literaturstelle PHD-Thesis von Mark John Micire: "Multi-Touch Interaction for Robot Command and Control", Dezember 2010, wird das Betätigen eines Roboters durch Verfahren eines Fingers auf einem Touchscreen beschrieben. Durch die Bewegung des Fingers können Richtung in einer Ebene und Geschwindigkeit eines Roboters gesteuert werden. Bei Entfernen des Fingers vom Touchscreen gelangt der Roboter zum Stillstand.

Nach der US 2008/0165255 A1 kann durch die Bewegung eines Fingers auf der Oberfläche eines Touchscreens ein Fahrzeug in zwei Dimensionen gesteuert werden.

Ein Multi-Touchscreen wird in der Literaturstelle NIEDERHUBER, Ch.: "Bedienpanel: Multitouch-Technologie mit Haptischen Elementen vereint", In: etz Elektrotechnik + Automation, Heft 1-2/2012, S. 2-4, beschrieben.

In dem Dokument SONICWAVEZOR: "Using IPod Touch to control NASA Robot over wifi", Internet Citation, 24. März 2010, Seite 1, ist in einem Film die Betätigung eines NASA-Roboters über einen Touchscreen eines iPods zu entnehmen. Hierzu ist es erforderlich, dass auf dem Display dargestellte Icons berührt werden, um gewünschte Bewegungen durchzuführen.

Der DE 103 03 793 A1 ist ein Display zu entnehmen, in dessen Längsrahmen als Mulden ausgebildete haptische Marken eingelassen sind.

Aus der Veröffentlichung Martin Edberg et al.: "Implementing Multi-Touch Screen for Real-time Control of a Robotic cell At Universidad Politecnica de Valencia", 31. Dezember 2010, Göteborg, Schweden, ist es bekannt, zur Bedienung eines Roboters virtuelle Bedienelemente auf einem Display eines Bediener-Interfaces zu nutzen.

Um eine Roboterbewegung oder Nutzung einer ein Display verwendenden Steuerung ausführen zu können, sieht die US 2009/0289591 A1 auf dem Display dargestellte Icons vor, die zu berühren sind.

Die Japanische Veröffentlichung H10 146782 beschreibt eine Vorrichtung zum Einlernen der Bewegung eines Roboters. Hierzu wird ein Display benutzt, auf dem Icons dargestellt sind, die zur Bewegung des Roboters entsprechend berührt werden müssen.

Der vorliegenden Erfindung liegt die Aufgabe zugrunde, ein Verfahren der eingangs genannten Art so weiterzubilden, dass die Sicherheit bei der Bedienung eines Industrieroboters erhöht wird. Auch soll der Industrieroboter im gewünschten Umfang in seiner Position verstellt werden. Ein Steuern des Roboters in seiner Verfahrensrichtung und Geschwindigkeit soll möglich sein.

Zur Lösung der Aufgabe wird vorgeschlagen, dass im Abstand entlang eines Rahmenabschnitts, der als haptische Marke dient, eine erste Verfahrfläche für eine zweidimensionale Positionsvorgabe und innerhalb des entlang des Rahmenabschnitts verlaufenden Abstands eine zweite Verfahrfläche für eine dritte Positionsvorgabe des Industrieroboters definiert werden, wobei der Finger beim Bewegen innerhalb der zweiten Verfahrfläche entlang des Rahmenabschnitts geführt wird, wobei beim Bewegen des Fingers innerhalb der ersten Verfahrfläche der Finger keinen Kontakt zu dem als haptische Marke dienenden Rahmenabschnitt und beim Bewegen des Fingers innerhalb der zweiten Verfahrfläche der Finger spürbaren Kontakt zu dem Rahmenabschnitt hat.

Insbesondere wird durch die Auslenkung des Fingers während des Berührens einer der Verfahrflächen ein Steuersignal generiert, das je nach eingestelltem Modus des Bediengeräts zur Geschwindigkeitsvorgabe oder Positionsvorgabe für Bewegungen des Industrieroboters verwendet wird.

Erfindungsgemäß wird durch eine 2D-Bewegung auf einem Touchscreen eine dreidimensionale Bewegung eines Roboters ermöglicht. Dabei erfolgt ein Führen eines Fingers wie Daumen entlang eines als haptische Marke dienenden Abschnitts des das Touch-Display umgebenden Rahmens, um den Roboter in einer Richtung zu verstellen. Ein Verstellen in den verbleibenden Richtungen des kartesischen Koordinatensystems oder eines definierten Koordinatensystems erfolgt im Abstand zu dem Finger wie Daumen. Durch die spezielle Anordnung kann der Bediener die zwei Verfahrfelder deutlich unterscheiden und blind erreichten. Das Feld direkt am Displayrand - der Finger hat spürbaren Kontakt mit dem Gehäuserand - wird die Verfahrvorgabe für die 3. Dimension aktiviert. Das Feld, ca. einen Fingerbreit neben dem Displayrand, aktiviert die Verfahrvorgabe in den verbleibenden zwei Dimensionen. Der Finger wie Daumen ist dabei deutlich zur Seite gespreizt und hat keinen Kontakt mit dem Gehäuserand. Will sich der der Bediener für die erste oder die zweite virtuelle Verfahrfläche entscheiden, so ist die Treffgenauigkeit des Fingers von untergeordneter Bedeutung. Der erste Fingerkontakt mit dem Touch-Display muss lediglich innerhalb der großzügig dimensionierten einen oder anderen virtuellen Verfahrfläche liegen. Dabei wird der erste Auftreffpunkt des Fingers als Null-Punkt angenommen, von dem aus jede weitere Fingerbewegung - unter permanentem Fingerkontakt mit dem Touch-Display - als Auslenkung gewertet wird, aus dem ein Steuersignal für die Verfahrvorgabe des Roboters generiert wird. Dieses durch die haptische Marke des Gehäuserandes unterstützte Verfahren erlaubt das Bewegen des Roboters in Blindbedienung.

Des Weiteren besteht die Möglichkeit, durch Änderung des Modus zwischen Positionsvorgabe und Geschwindigkeitsvorgabe für den Roboter umzustellen, wobei die gleichen Verfahrflächen des Touch-Displays in zuvor beschriebener Weise genutzt werden können.

Vorzugsweise ist die Strecke der Auslenkung des Fingers auf der definierten Verfahrfläche bzw. virtuellen Bedienelement proportional zu der Verfahrgeschwindigkeit und/oder der Position des Industrieroboters. Nach dem Berühren der definierten Verfahrfläche steht dem Finger während des kontaktbehafteten Gleitens die gesamte Touch-Displayfläche, auch über die Feldbegrenzungen der dargestellten virtuellen Verfahrfläche hinaus, zur Verfügung.

Der Industrieroboter gelangt zum Stillstand, wenn die Bedienperson ihren Finger von dem Touch-Display abhebt. Des Weiteren ist vorgesehen, dass die Sensibilität einer Reaktion auf eine Bewegung eines Fingers über ein virtuelles Bedienelement wie Schiebe-Regler sowohl für die Positionsvorgabe als auch für die Geschwindigkeitsvorgabe stufenlos eingestellt wird.

Vorzugsweise erfolgt eine zweidimensionale Positionsvorgabe wie X- und Y-Koordinaten durch Berühren einer definierten Verfahrfläche, die derart auf dem Touch-Display mit Abstand zu dem Displayrand positioniert wird, dass die Verfahrfläche mit einem Finger wie Daumen bedienbar ist.

Der Bereich des Touch-Displays, bei dem es sich um einen marktüblichen Touchscreen mit glatter Oberfläche handelt, der vorzugsweise als kapazitiver Touchscreen ausgebildet ist, gleichwenn auch ein resistiver Touchscreen in Frage kommt, in dem ein Finger, insbesondere Daumen, von einer Bedienperson berührend auf dem Touch-Display bewegt werden muss, um die X-Y-Koordinaten des Roboters vorzugeben, verläuft in einem sogenannten randfernen Bereich des Touch-Displays, vorzugsweise in einem Abstand von zumindest einer Daumenbreite zum Rahmen, der das Touch-Display umgibt.

Des Weiteren sieht die Erfindung vor, dass der Industrieroboter über ein unmittelbar seitlich an dem Displayrand angeordnetes Bedienelement in einer dritten Koordinatenrichtung (Z-Koordinate) steuerbar ist, wobei der Finger einer Bedienperson durch den Displayrand und/oder auf dem Displayrand und entlang von diesem verlaufende haptische Marke geführt wird.

Bei den X-, Y- und Z-Koordinaten handelt es sich insbesondere um Koordinaten des kartesischen Koordinatensystems. Durch Hinzufügen zumindest einer weiteren oder von weiteren virtuellen Verfahrflächen können die Werkzeugorientierungen (Drehwinkel) A, B und C gesteuert werden. Diese weiteren Verfahrflächen sind in Aufbau und Funktion vergleichbar mit den Verfahrflächen für die X-, Y- und Z- Verfahrvorgaben und werden mit diesen gemeinsam dargestellt. Dabei ist die Platzierung auf dem Touch-Display so gewählt, dass die Verfahrfläche für die Verfahrrichtung "C" an einen Randabschnitt des Gehäuserahmens (dieser dient als haptische Marke) angrenzt und die Verfahrfläche für die Verfahrrichtungen "A" und "B" in definiertem Abstand zum Gehäuserand platziert sind.

Somit können mit einem Touch-Display alle 6 Freiheitsgrade eines Roboters in Blindbedienung gesteuert werden.

Soll nicht eine Verstellung, sondern ausschließlich eine Geschwindigkeitsbeeinflussung in der Position in X-, Y- und/oder Z-Richtung bzw. A-, B- und/oder C-Richtung bzw.-Winkel erfolgen, so wird der Modus durch Berühren eines entsprechenden virtuellen Elementes auf dem Touch-Display umgestellt, um in zuvor beschriebener Weise die Verfahrgeschwindigkeit einzustellen.

Mit anderen Worten wird die Möglichkeit, nach dem Berühren des Touch-Displays den Finger mehr oder weniger zu "ziehen", genutzt, um eine analoge Verfahrvorgabe für den Roboter zu erzeugen. So kann der Roboter in 6 Freiheitsgraden (z. B. X, Y, Z und Werkzeugorientierung A, B, C) feinfühlig gesteuert werden.

Mit der Auslenkung des Fingers ist es möglich, eine Positionsvorgabe an den Roboter zu geben, ähnlich der Cursorsteuerung per Touchpad bei einem Notebook. Der Roboter lässt sich dabei gleichzeitig in zwei Koordinatenrichtungen, z. B. X und Y bzw. A und B verfahren.

In einem weiteren Modus wird durch die Fingerauslenkung eine Geschwindigkeitsvorgabe für den Roboter erzeugt: je mehr der Finger ausgelenkt ist, umso schneller fährt der Roboter.

Nach dem Berühren der ausgewählten Verfahrfläche kann der Finger anschließend auch über die Feldbegrenzung über das gesamte Display gezogen werden und so Fahrvorgaben erzeugen. Nach dem Loslassen bleibt der Roboter sofort stehen. Danach muss für eine erneute Verfahrvorgabe das gewünschte Feld wieder getroffen werden.

Die Sensibilität der Reaktion auf eine Fingerbewegung kann über einen Regler, z. B. den Override, sowohl für die Positionsvorgabe als auch für die Geschwindigkeitsvorgabe stufenlos eingestellt werden.

Die sensitive Fläche für das 2D-Verfahren (X-, Y-Richtung bzw. A-, B-Richtung) ist in der Nähe des Displayrandes platziert, so dass sie mit einem deutlichen Abstand zum Displayrand mit dem Finger (z. B. mit dem abgespreizten Daumen) noch gut erreicht werden kann.

Um auch in der dritten Koordinatenrichtung (Z-Richtung bzw. C-Richtung) verfahren zu können, wird ein fingerbreites Feld direkt seitlich am Displayrand platziert, so dass dieses Feld mit dem Finger ertastet werden kann. Dieses Feld erzeugt eine eindimensionale Verfahrvorgabe (Z-Richtung bzw. C-Richtung).

Durch die spezielle Anordnung kann der Bediener die zwei Verfahrfelder deutlich unterscheiden und blind erreichen: Das Feld direkt am Displayrand (Finger hat spürbaren Kontakt mit dem Gehäuserand) aktiviert die Verfahrvorgabe für die dritte Dimension. Das Feld, ca. einen Fingerbreit neben dem Displayrand, aktiviert die gleichzeitige Verfahrvorgabe in zwei Dimensionen.

Ein Industrieroboter besitzt 6 Freiheitsgrade. Für die Einstellung der Werkzeugorientierung mit den drei Winkeln (A, B, C) wird das gleiche Verfahren wie oben beschrieben verwendet. Dabei wird das Display in zwei Zonen aufgeteilt. In einer (z. B. der oberen) Zone befinden sich die Felder für die Dimensionen 1-3 (z. B. X, Y, Z). In der anderen (z. B. der unteren) Zone befinden sich die Verfahrfelder für die Dimensionen 4-6 (z. B. A, B, C). Über haptische Marke können die beiden Zonen blind unterschieden werden.

Als Touch-Display wird vorzugsweise ein Multitouch-Display oder Singletouch-Display verwendet.

Mit einem Multitouch-Display kann der Roboter so in allen 6 Freiheitsgraden simultan verfahren werden. Mit einem Singletouch-Display können die Verfahrfunktionen nur sequentiell verwendet werden.

Die erfindungsgemäße Vorrichtung zeichnet sich gegenüber dem Stand der Technik insbesondere dadurch aus, dass die Anzahl der Hardwarekomponenten auf ein absolutes Minimum reduziert wird. Alle Bedienfunktionen werden konsequent in Touch-Software realisiert, mit Ausnahme der sicherheitsgerichteten Schalter "Not-Halt" und "Zustimmung". Es sind keine weiteren elektrischen Komponenten wie Folientasten, Schalter oder Signallampen erforderlich. Dadurch ist das System wartungsarm.

Der erreichte Platzgewinn geht zugunsten eines großen komfortablen Touch-Displays. Die auf dem Touch-Display dargestellten virtuellen Bedienelemente und Anzeigen sind für die Industrieanwendung angelegt und sind kontrastreich und groß dargestellt, so dass eine zuverlässige Bedienung möglich ist.

Gemäß einer weiteren bevorzugten Ausführung des Verfahrens ist vorgesehen, dass die Berührung des virtuellen Bedienelementes auf der Oberfläche des Touch-Displays durch Ermitteln einer ersten Koordinate eines Berührungspunktes erfasst wird und dass eine Auslösung der Funktion des virtuellen Bedienelementes erfolgt, wenn die erste Koordinate des Berührungspunktes nach bleibendem Kontakt mit der Oberfläche des Touch-Displays einen vorgegebenen Koordinatenbereich durch eine manuelle Aktion der Bedienperson verlässt.

Dabei kann die manuelle Aktion durch eine Gestik der Bedienperson ausgelöst werden. Die Gestik kann durch Ziehen eines Fingers der Bedienperson auf dem Touch-Display in den oder aus dem vorgegebenen Koordinatenbereich ausgeführt werden. Vorzugsweise wird die Gestik in eine definierte Richtung ausgeführt wird, wobei die Sensibilität der Reaktion auf die Fingerbewegung, die Intensität der Gestik stufenlos einstellbar ist.

Des Weiteren bezieht sich die Erfindung auf ein eigenerfinderisches Verfahren zur Bedienung eines Industrieroboters mit einem Handgerät. Dabei ist vorgesehen, dass die Auslösung einer Touch-Funktion eine manuelle Aktion des Bedieners auf dem Touch-Display erfordert. Um ein versehentliches Auslösen von virtuellen Bedienelementen durch unbeabsichtigte Berührung zu verhindern, wird eine Funktion erst ausgelöst, wenn nach der Berührung des Touch-Displays eine spezielle "Kleingestik" ausgeführt wird, z.B. Verziehen des Fingers in eine definierte Richtung. Somit ergibt sich ein "ReliableTouch".

Die zum Auslösen einer Funktion erforderliche Gestik, also die erforderliche Intensität oder Art der Gestik, kann stufenlos eingestellt werden: Sie reicht von einer einfachen Fingerberührung, allgemein übliche Bedienung des Touch-Displays, bis hin zu einer definierten Geste. Durch haptische Marken wie die spezielle Ausprägung von Fingermulden im Displayrand kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: ein Programmierhandgerät zur Bedienung eines Industrieroboters,
- Fig. 2: einen Abschnitt eines an das Touch-Display angrenzenden Displayrahmens des Programmierhandgerätes,
- Fig. 3: einen zweiten Abschnitt eines an das Touch-Display angrenzenden Displayrahmens und
- Fig. 4: einen dritten Abschnitt eines an das Touch-Display angrenzenden Displayrahmens,
- Fig. 5: eine Rückansicht des Programmierhandgerätes,
- Fig. 6: ein schematisches Verfahren zur Bedienung eines Industrieroboters mit einem Bediengerät,
- Fig. 7: einen Ausschnitt einer Bedienoberfläche des Bediengerätes mit virtuellen Bedienelementen,
- Fig. 8: einen Ausschnitt einer Bedienoberfläche des Bediengerätes mit einem Bild mit grafischer Information,
- Fig. 9: eine Bedienoberfläche des Bediengerätes mit verschiedenen Verfahrflächen und

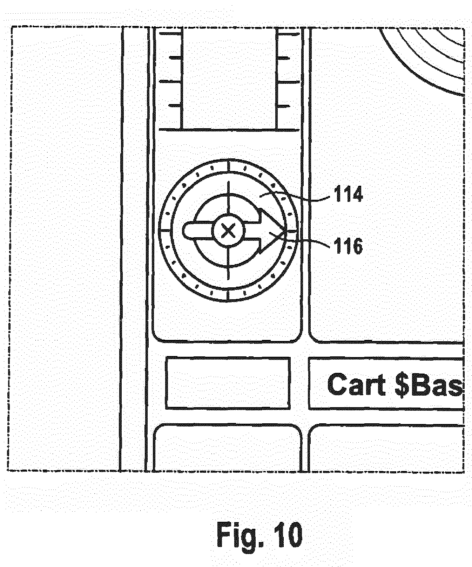

- Fig. 10: ein virtuelles Bedienelement zur Rekalibrierung des Koordinatensystems des Bediengerätes.

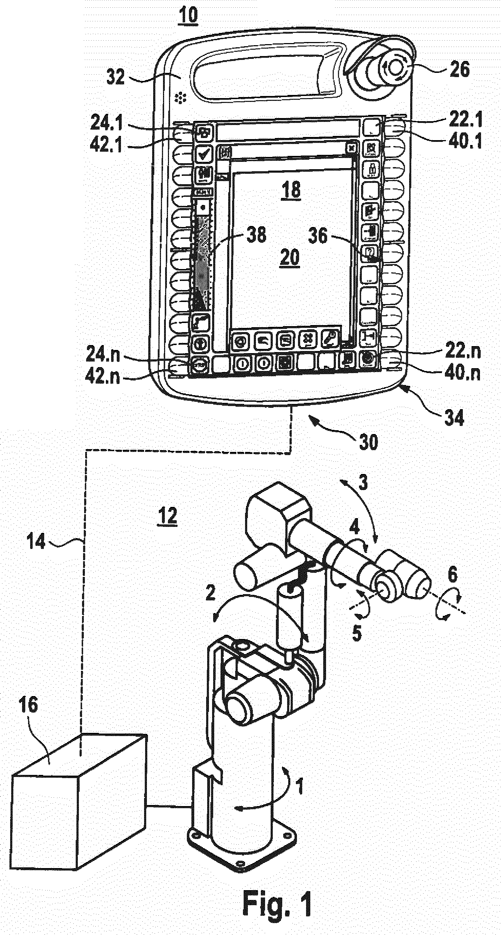

Fig. 1 zeigt eine Vorrichtung 10 in Form eines Programmierhandgerätes zur Bedienung eines Industrieroboters 12. Dazu ist das Handgerät 10 über eine drahtlose oder drahtgebundene Kommunikationsverbindung 14 mit einer Robotersteuerung 16 verbunden. Das Handgerät 10 umfasst ein grafisches Bediener-Interface 18 mit einem berührungsempfindlichen Display 20 - nachfolgend Touch-Display genannt. Das Touch-Display dient zur Anzeige zumindest eines virtuellen Bedienelementes 22.1...22.n, 24.1...24.n welches eine Funktion zur Steuerung, Programmierung oder Bedienung des Industrieroboters 12 repräsentiert, wobei bei Berührung des virtuellen Bedienelementes 22.1...22.n, 24.1...24.n mit einem Finger einer Bedienperson oder einem Stift die zugeordnete Funktion ausgelöst wird.

Das Handgerät 10 umfasst des Weiteren eine Steuereinheit 30 zur Steuerung des grafischen Bediener-Interface 18 und zur Kommunikation mit der Robotersteuerung 16 sowie einen Positionssensor zur Bestimmung von Position und Neigung des Bediengerätes.

Das grafische Bediener-Interface 18 mit den Touch-Display 20 ist zusammen mit der Steuereinheit 30 in einem Gehäuse 32 angeordnet. Das Gehäuse 32 bildet einen Displayrahmen 34, der das Touch-Display 20 randseitig umschließt. Auf einer Oberseite des Gehäuses 32 ist des Weiteren ein sicherheitsgerichteter "Not-Halt"-Schalter 26 angeordnet.

Die virtuellen Bedienelemente 22.1 .... 22.n sowie 24.1 ... 24.n sind entlang jeweils eines an das Touch-Display 20 angrenzenden Rahmenabschnitts 36, 38 des Displayrahmens angeordnet. Um eine Blind-Bedienung der virtuellen Bedienelemente 22.1 ... 22.n bzw. 24.1 ... 24.n zu ermöglichen, sind gemäß eines ersten eigenständigen Erfindungsgedankens in dem Rahmenabschnitt 36, 38 jeweils haptische Marken 40.1 ... 40.n bzw. 42.1 ... 42.n angeordnet. Jeder haptischen Marke 40.1 ... 40.n, 42.1 ... 42.n ist ein virtuelles Bedienelement 22.1 ... 22.n, 24.1 ... 24.n zugeordnet.

Dabei grenzt insbesondere das virtuelle Bedienelement 22.1 ... 22.n, 24.1 ... 24.n unmittelbar an der haptischen Marke 40.1 ... 40.n bzw. 42.1 ... 42.n an, so dass ein unmittelbarer Übergang von der haptischen Marke 40.1 ... 40.n bzw. 42.1 ... 42.n zum virtuellen Bedienelement 22.1 ... 22.n, 24.1 ... 24.n erfolgt. Quasi in einem Zug wird infolgedessen ein entlang einer haptischen Marke 40.1 ... 40.n bzw. 42.1 ... 42.n geführter Finger zum virtuellen Bedienelement 22.1 ... 22.n, 24.1 ... 24.n hingeführt. Hierdurch werden Fehlbedienungen vermieden bzw. minimiert: Zuerst wird die Position des virtuellen Bedienelements mit Hilfe der haptischen Marken ertastet und anschließend wird die Funktion durch Berührung des virtuellen Bedienelements ausgelöst. Ferner ist es nicht erforderlich, dass der Touchscreen, also das Display 20 besonders gestaltet werden muss. Insbesondere und in Abweichung vom Stand der Technik ist es nicht erforderlich, dass auf das Display besondere überlagerte Materialien angebracht werden, wodurch andernfalls Transparenzeinbußen auftreten.

Die haptischen Marken 40.1 ... 40.n bzw. 42.1 ... 42.n bilden eine Führung, durch die ein Finger einer Bedienperson zu dem zugeordneten virtuellen Bedienelement 22.1 ... 22.n, 24.1 ... 24.n geführt wird.

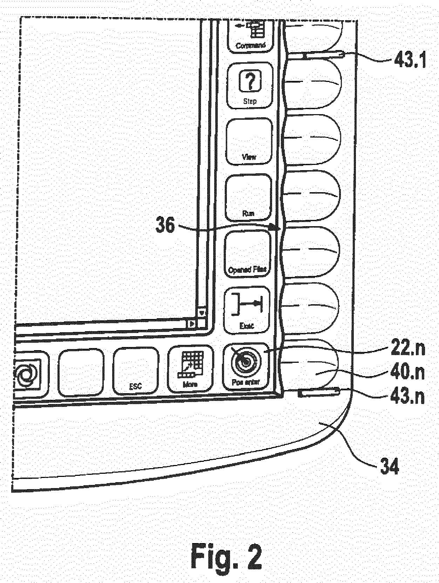

Fig. 2 zeigt eine vergrößerte Darstellung der Bedienelemente 22.1 ... 22.n und den diesen zugeordneten haptischen Marken 40.1 ... 40.n.

Durch die Anordnung der virtuellen Bedienelemente 22.1 ... 22.n bzw. 24.1 ... 24.n entlang der die haptischen Marken 40.1 ... 40.n, 42.1 ... 42.n aufweisenden Rahmenabschnitte 36, 38 wird eine sichere Bedienung der virtuellen Bedienelemente gewährleistet. Dabei dient der abgesetzte und besonders ausgeprägte Rahmenabschnitt 36, 38 zur taktilen Orientierung auf dem Touch-Display 20.

In dem in Fig. 2 dargestellten Ausführungsbeispiel sind die haptischen Marken 40.1 ... 40.n, 42.1 ... 42.n als Fingermulden ausgebildet, die so ausgeformt sind, dass sie mit den Fingern zuverlässig ertastet werden können und eine Führung des Fingers von den Rahmenabschnitten 36, 38 in Richtung auf das zugeordnete virtuelle Bedienelement 22.1 ... 22.n bzw. 24.1 ... 24.n sicherstellen.

Ferner sind haptische Marken 43.1 ... 43.n vorgesehen, die als Noppen ausgebildet und auf einer Oberfläche des Displayrahmens 34 angeordnet sind.

Dadurch wird zum einen die prinzipiell fehlende Haptik eines Touch-Displays kompensiert und zum anderen kann der Bediener die visuelle Aufmerksamkeit auf den Industrieroboter und den Prozess richten ohne auf das Handbediengerät schauen zu müssen, wodurch insgesamt die Bediensicherheit erhöht wird. Eine "Blindbedienung" wird ermöglicht.

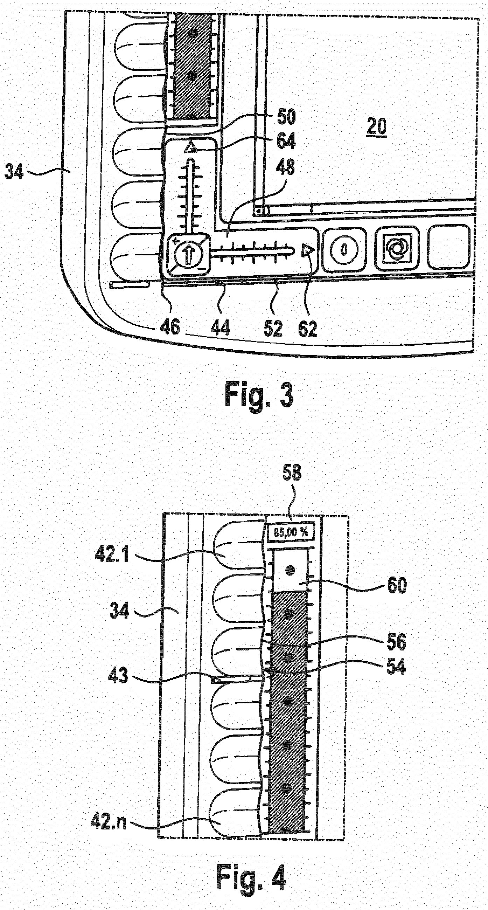

Fig. 3 zeigt eine Ausführungsform einer haptischen Marke 44 als eine an das Touch-Display 20 angrenzende Rahmenecke 46 des Displayrahmens 34. Durch die Rahmenecke 46 des Displayrahmens 34 wird eine eindeutige, exakte Position auf dem Touch-Display 20 definiert. Zu diesen ausgewählten Positionen ist ein virtuelles Bedienelement 48 in Form eines Schiebe-Elements auf dem Touch-Display 20 vorgesehen, welches beispielsweise in linearer Richtung entlang eines displayseitigen Rahmenabschnitts 50 oder eines anderen Rahmenabschnitts 52 der Rahmenecke 46 bewegt wird. Je nach ausgewählter Bewegungsrichtung ändert sich Darstellung und Funktion des virtuellen Schiebe-Elements 48.

Fig. 4 zeigt eine weitere Ausführungsform einer haptischen Marke 54, die als displayseitiger Rahmenabschnitt 56 des Displayrahmens 34 ausgebildet ist. Entlang des Rahmenabschnitts 56 kann der Finger einer Bedienperson eine Verschiebebewegung ausführen, über die ein entlang des Rahmenabschnitts 56 verlaufendes virtuelles Schiebe-Element 60 verstellt werden kann.

Die in Fig. 1 und 2 dargestellten und als Fingermulden ausgebildeten haptischen Marken 40.1 ... 40.n, 42.1 ... 42.n bilden eine haptische Orientierung auf dem DisplayRand mit hoher Auflösung, z.B. für das Erfühlen von Positionen der virtuellen Bedienelemente 22.1 ... 22.n, 24.1 ... 24.n, da diese unmittelbar neben den Fingermulden angeordnet sind. Jeder Fingermulde kann ein virtuelles Bedienelement eindeutig zugeordnet werden. Die Fingermulden 22.1 .... 22.n, 24.1 ... 24.1n sind halb offen ausgeführt und in Richtung des Touch-Displays 20 geöffnet, so dass ein Finger wie in einer Rinne geführt auf das Touch-Display 20 gleiten und dort eine Funktion des virtuellen Bedienelementes 22.1 ... 22.n, 24.1 ... 24.n auslösen kann.

Gemäß eines eigenständigen Erfindungsgedankens ist vorgesehen, dass die Auslösung einer dem virtuellen Bedienelement 22.1...22.n, 24.1...24.n zugeordneten Funktion eine manuelle Aktion der Bedienperson auf dem Touch-Display 20 erfordert. Um ein versehentliches Auslösen der virtuellen Bedienelemente 22.1...22.n, 24.1...24.n durch unbeabsichtigte Berührung zu verhindern, wird eine Funktion erst ausgelöst, wenn nach der Berührung des Touch-Displays 20 eine vordefinierte Gestik wie beispielsweise Verziehen des Fingers in eine definierte Richtung ausgeführt wird. Die Sensibilität der Reaktion auf die Fingerbewegung kann über einen Regler stufenlos eingestellt werden. Somit kann die Intensität der erforderlichen Gestik, um Funktionen auszulösen, stufenlos eingestellt werden. Sie reicht von einer einfachen Fingerberührung, allgemein übliche Bedienung des Touch-Displays 20, bis hin zu einer speziellen kleinen Geste. Durch die besondere Ausprägung der Fingermulden 22.1...22.n, 24.1...24.n im Rahmenabschnitt 36, 38 des Displayrahmens kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Sobald die Bedienperson mit dem Finger z.B. ausgehend von der Fingermulde 40.n das virtuelle Bedienelement 22.n berührt, werden die entsprechende Koordinate des Berührungspunktes auf dem Touch-Display durch die Steuereinheit 30 erfasst. Entsprechend der Definition einer voreingestellten Gestik wird die zugehörige Funktion erst dann ausgelöst, wenn der Finger der Bedienperson einen vorgegebenen Koordinatenbereich verlässt bzw. einen vordefinierten Koordinatenbereich erreicht. Wenn das virtuelle Bedienelement ausgelenkt ist und somit auslösebereit ist (Auslösung erfolgt bei Loslassen des Fingers), wird dies durch eine optische Kennung, z.B. durch eine farbige Umrandung, am Bedienelement gekennzeichnet. Wird eine versehentliche Auslenkung wieder rückgängig gemacht, indem das Bedienelement wieder in den Ursprung zurückgezogen wird, wird dies durch ein Verschwinden dieser optischen Kennung kenntlich gemacht.

Gemäß einer weiteren eigenerfinderischen Ausführungsform der Erfindung werden virtuelle Bedienelemente 48, die z.B. in der Rahmenecke 46 des Displayrahmens 34 platziert sind, mit einer besonderen Gestensteuerung verknüpft. Diese können z.B. entlang der Rahmenabschnitte 50, 52 in zwei Richtungen 62, 64 verschoben werden, wie dies in Fig. 3 dargestellt ist. Jeder Bewegungsrichtung 62, 64 ist eine wählbare Funktion zugeordnet. So ist es z.B. möglich, beim Bewegen entlang des Rahmenabschnitts 52 eine Funktion "A" und beim Bewegen entlang des Rahmenabschnitts 50 eine Funktion "B" zu aktivieren. Der Grad der Auslenkung wird dabei ausgewertet, wobei zwei Auswertungsmöglichkeiten vorgesehen sind.

Gemäß einer ersten Auswertungsmöglichkeit wird der Grad der Auslenkung sofort als analoger Parameter wie Geschwindigkeitsvorgabe an die Funktion übergeben. Wird der Finger in ausgelenkter Stellung losgelassen, springt der Analogwert sofort auf null. Wird der Finger gleitend wieder in die Ausgangsposition 66 geführt, stellt sich der Parameter analog der Auslenkung wieder auf null zurück. Diese Funktion kann verwendet werden, um z.B. ein Bewegungsprogramm in positive oder negative Richtungen zu starten und dabei die Geschwindigkeit stufenlos zu variieren.

Gemäß einer zweiten Auswertungsmöglichkeit ist vorgesehen, dass bei Überschreitung eines definierbaren Schwellwertes eine schaltende Funktion ausgelöst wird. Die Aktivierung der Funktion erfolgt erst dann, wenn der Finger in ausgelenkter Stellung das Touch-Display 20 verlässt. Wird der Finger jedoch ohne Loszulassen auf den Rahmenabschnitten 50, 52 wieder in die Nulllage zurückgeführt, wird die Funktionsauslösung verhindert.

Ein weiterer eigenerfinderischer Gedanke der Erfindung bezieht sich auf die Realisierung einer sogenannten Override-Funktion (Geschwindigkeitsregler), die über das virtuelle Schiebe-Bedienelement 60, welches in Fig. 4 dargestellt ist, realisiert wird. Dazu wird das Schiebe-Bedienelement 60 angrenzend neben dem Rahmenabschnitt 56 und mittig zur haptischen Marke 43 platziert. Dadurch kann die Position des Schiebe-Bedienelementes 60 "ertastet" und durch Verschiebung des Fingers entlang des Rahmenabschnitts 56 verstellt werden. Die blinde Verstellung wird durch die haptischen Marken 42.1...42.n, 43, 54 der Rahmenabschnitte 38, 56 zusätzlich unterstützt. Der sogenannte Override kann bei einer Verschiebung zwischen zwei haptischen Marken um einen definierten Betrag, z.B. 20 %, verstellt werden. Mittels des randseitig angeordneten Schiebe-Bedienelementes 60 können auch andere analoge Größen wie Prozessparameter in Blindbedienung eingestellt werden.

Ein weiteres eigenerfinderisches Merkmal bezieht sich auf die symmetrische Anordnung der haptischen Marken 22.1...22.n, 24.1...24.n bezogen auf die Längs- und/oder Querachse des Touch-Displays 20. Die Längsmittenachse ist dabei die Gerade, die mittig und parallel zu den Längsrahmenschenkeln des Displayrahmens 34 verläuft.

Senkrecht hierzu verläuft die Quermittenachse, also mittig zwischen und parallel zu den kürzeren Querschenkeln des Displayrahmens 34. Dadurch wird gewährleistet, dass das Handgerät 10 sowohl für eine Rechtshänder-Bedienung als auch eine Linkshänder-Bedienung geeignet ist. Dies wird insbesondere durch das konsequente tastenlose Design des grafischen Bediener-Interfaces und durch die symmetrische Anordnung der haptischen Marken erreicht. Somit kann das grafische Bediener-Interface über eine einfache Set-Up-Funktion von Rechtshänder-Bedienung auf Linkshänder-Bedienung umgeschaltet werden. Dabei werden alle Positionen der virtuellen Bedienelemente 22.1...22.n, 24.1...24.n an der Längsachse des Touch-Displays 20 gespiegelt.

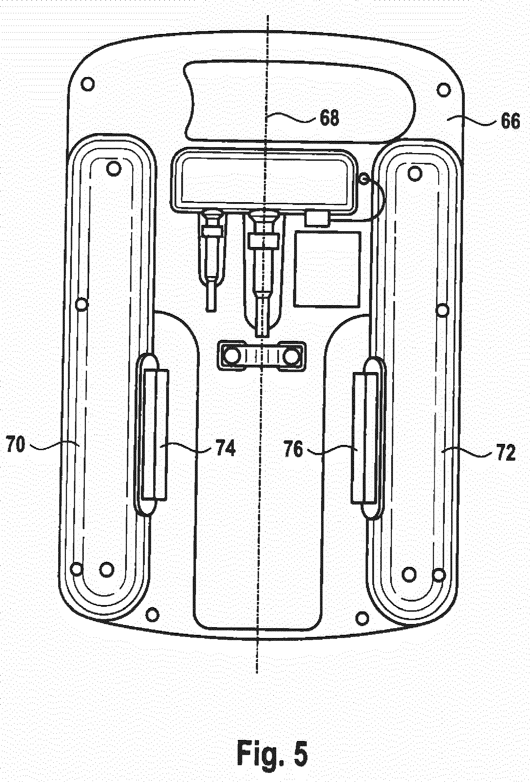

Fig. 5 zeigt eine Rückseite 66 des Gehäuses 32. Auf der Rückseite 66 und symmetrisch zur Längsachse 68 sind Halteleisten 70, 72 angeordnet, an denen das Handgerät 10 mit einer oder mit beiden Händen sicher gehalten werden kann. Die Halteleisten 70, 72 können eine Außengeometrie aufweisen, die Zylinderabschnitten entspricht, wobei die Halteleisten 70, 72 vom Außenrand, also von den Längsrändern des Displayrahmens 34 ausgehen sollten. In jeder Halteleiste 70, 72 ist jeweils ein Zustimm-Schalter oder Zustimm-Taster 74, 76 integriert, von denen wahlweise einer für die Verfahrfreigabe des Industrieroboters betätigt werden muss.

Durch diese symmetrische Anordnung wird einer Handermüdung vorgebeugt, da die Zustimm-Schalter 74, 76 wechselweise mit der linken oder rechten Hand betätigt werden können. Bei Handermüdung kann die jeweils andere Hand die Zustimmung übernehmen, ohne dass dadurch die Verfahrfreigabe für die Roboterbewegung unterbrochen wird.

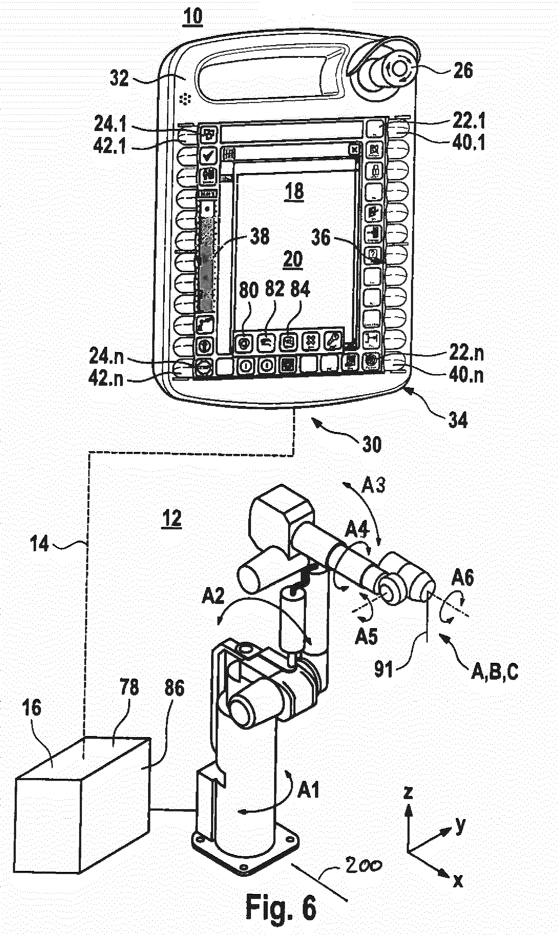

Eine weitere eigenerfinderische Ausführungsform der Erfindung zeichnet sich dadurch aus, dass ein bislang üblicher Schlüsselschalter für die Anwahl der Roboterbetriebsarten "Einrichten", "Automatik", Automatik-Test" durch eine Softwarefunktion ersetzt wird. Die Besonderheit liegt u.a. in der Datenverarbeitung in sicherer Technik. Das Touch-Display 20 ist prinzipiell ein einkanaliges und somit unsicheres Gerät. Unter Zuhilfenahme einer in die Robotersteuerung 16 gemäß Fig. 6 integrierten Sicherheitssteuerung 78, nachfolgend SafetyController 78 genannt, wird eine sichere Funktionalität der Software gewährleistet. Der SafetyController 78 ist in der Europäischen Patentanmeldung 1 035 953 beschrieben, deren Offenbarung vollumfänglich in die vorliegende Anmeldung aufgenommen wird. Die erfindungsgemäße Lehre ist jedoch nicht auf eine Sicherheitssteuerung entsprechend der Europäischen Patentanmeldung 1 035 953 beschränkt

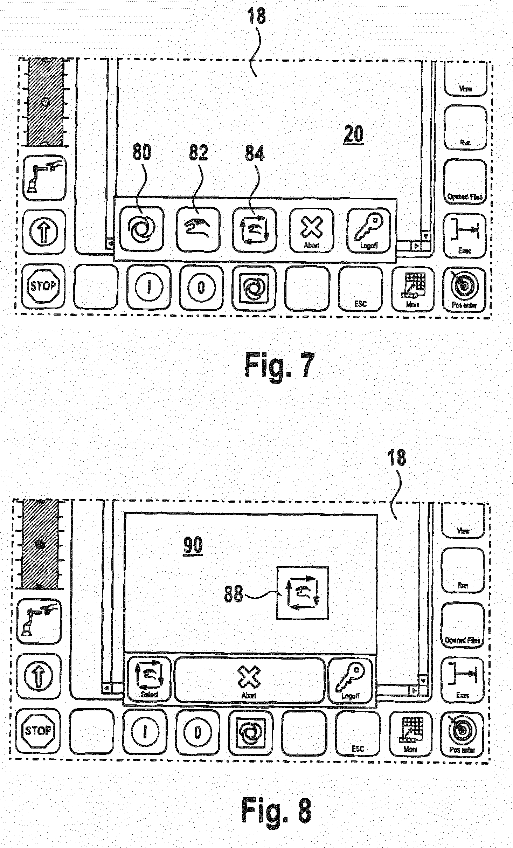

Auf dem Touch-Display 20 werden von der Bedienoberfläche 18 verschiedene Betriebsart-Optionen in Form von virtuellen Bedienoberflächen 80, 82, 84 wie Softkeys zur Auswahl angeboten, wie dies in Fig. 7 dargestellt ist. Über die Berührung eines dieser Softkeys 80, 82, 84 wählt der Bediener eine neue Betriebsart "X" aus. Von der Software der Bedienoberfläche wird die neu ausgewählte Betriebsart als Kommando "Anforderung neue Betriebsart-X" an den SafetyController 78 gesendet. Der SafetyController 78 entnimmt aus seinem Speicher 86 eine dieser Betriebsart entsprechende grafische Information wie Icon 88 und platziert es an eine zufällig bestimmte Anzeige-Position in einem größeren Bild 90. Die Position des Icons 88 in dem Bild 90 ist nur dem SafetyController 78 bekannt. Dieses Bild 90 wird als Bilddatei wie Bitmap zur Bedienoberfläche 18 gesendet und dort in einer definierten Position zur Anzeige gebracht, wie dies in Fig. 8 dargestellt ist.

Durch einen Fingertip auf das dargestellte Icon 88 muss der Bediener die vom SafetyController 78 erkannte Betriebsart bestätigen. Eine Berührungs-Position auf dem Touch-Display wird in Form von Touchkoordinaten erfasst und an den SafetyController 78 zurückgesendet. Dieser vergleicht die Berührungs-Position mit der nur dem SafetyCotnroller bekannten zufälligen Anzeige-Position des Icons 88 in dem Bild 90. Der Vergleich erfolgt unter Berücksichtigung der bekannten Position des Bildes 90 auf dem Touch-Display 20. Ist die Berührungsposition (innerhalb einer definierten Toleranz) gleich der Anzeigeposition, wird der eingeleitete Betriebsartenwechsel ausgeführt. Andernfalls wird der Betriebsartenwechsel verworfen und die vorherige Betriebsart bleibt erhalten.

Durch dieses Verfahren entsteht ein sicherer Wirkkreis zwischen Bediener und SafetyController 78:
- Bediener wählt eine Betriebsart an,
- SafetyController 78 zeigt die erkannte Betriebsart auf dem Bediengerät 10 an,
- Bediener bestätigt dem SafetyController 78 die Richtigkeit der angezeigten Betriebsart,
- SafetyController 78 stellt die neue Betriebsart ein.

Alternativ zum o. g. Verfahren kann der SafetyController 78 einen ikonisierten Zahlencode anzeigen, der vom Bediener erkannt, und als Zahl über eine angezeigte Tastatur eingegeben werden muss. Die Berührungs-Position der angezeigten Zahlen der Tastatur wird an den SafetyController gesendet, der darüber die Richtigkeit der Eingabe überprüft.

Die Icons 80, 82, 84 sind in dem SafetyController 78 in sicherer Technik gespeichert.

Optional kann eine Anforderung zum Betriebsartenwechsel auch über einen Hardware-Schlüsselschalter kommen.

Das Einstecken/Abziehen des Schlüssels in den Betriebartenwahlschalter wird durch ein Login/Logout-Verfahren mittels PIN nachgebildet.

Die Möglichkeit nach dem Berühren des Touch-Displays 20 den Finger mehr oder weniger zu "ziehen", wird gemäß eines eigenerfinderischen Verfahrens genutzt um eine analoge Verfahrvorgabe für den Industrieroboter 12 zu erzeugen. So kann der Industrieroboter 12 gemäß Fig. 6 in 6 Freiheitsgraden z. B. X, Y, Z und Orientierungen A, B, C eines Werkzeugs 91 feinfühlig gesteuert werden.

Mit der Auslenkung des Fingers einer Bedienperson ist es möglich eine Positionsvorgabe an den Industrieroboter 12 zu geben, ähnlich der Cursorsteuerung per Touchpad bei einem Notebook. Der Industrieroboter 12 lässt sich dabei gleichzeitig in zwei Koordinatenrichtungen verfahren, z.B. X- und Y-Richtung des kartesischen Koordinatensystems.

In einem weiteren Modus wird durch eine Auslenkung des Fingers eine Geschwindigkeitsvorgabe für den Industrieroboter 12 erzeugt: je mehr der Finger ausgelenkt ist, umso schneller fährt der Roboter.

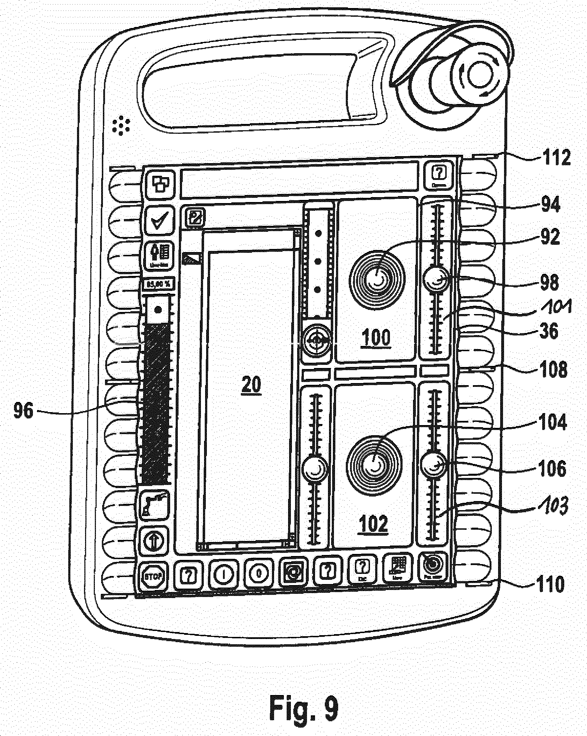

Nach dem Berühren einer in Fig. 9 dargestellten ausgewählten Verfahrfläche 100 aktiviert der Benutzer ein virtuelles Bedienelement 92, das in dem Bereich des Berührungspunktes positioniert wird. Anschließend kann das virtuelle Bedienelement 92 mittels des Fingers auch über eine Begrenzung 94 über das gesamte Touch-Display 20 gezogen werden und so Fahrvorgaben erzeugen. Nach dem Loslassen bleibt der Industrieroboter 12 sofort stehen. Danach muss für eine erneute Verfahrvorgabe die gewünschte Fläche 92 wieder getroffen werden.

Die Sensibilität der Reaktion auf eine Fingerbewegung kann über ein virtuelles Bedienelement 96 wie Schiebe-Regler (Override) sowohl für die Positionsvorgabe als auch für die Geschwindigkeitsvorgabe stufenlos eingestellt werden.

Die sensitive Fläche 100 für das 2D-Verfahren ist in der Nähe des Displayrandes 36 platziert, so dass sie mit einem deutlichen Abstand zum Displayrand mit dem Finger (z.B. mit dem abgespreizten Daumen) noch gut erreicht werden kann.

Um auch in eine dritte Koordinatenrichtung (z. B. Z-Koordinate des kartesischen Koordinatensystems) verfahren zu können, wird ein etwa fingerbreites Feld 101 direkt seitlich am Displayrand 36 mit einem virtuellen Bedienelement 98 platziert, so dass dieses Feld 101 mit dem Finger "ertastet" werden kann, indem der Finger, insbesondere der Daumen entlang des Displayrandes 36 geführt wird. Dieses Feld erzeugt eine eindimensionale Verfahrvorgabe, z.B. in Z-Richtung.

Durch die spezielle Anordnung kann der Bediener die zwei Verfahrfelder 100, 101 deutlich unterscheiden und blind erreichen: Das Feld 101 direkt am Displayrand 36, wobei der Finger spürbaren Kontakt mit dem Gehäuserand hat, aktiviert die Verfahrvorgabe für die dritte Dimension (Z-Dimension). Das Feld 100, welches ca. einen Finger- oder Daumenbreit neben dem Displayrand 36 platziert ist, aktiviert die gleichzeitige Verfahrvorgabe in zwei Dimensionen (X-Y-Dimension).

Der Industrieroboter 12 besitzt 6 Freiheitsgrade. Für die Einstellung der Orientierung des Werkzeugs 91 mit den drei Winkeln (A, B, C) wird das gleiche Verfahren wie oben beschrieben verwendet. Dazu wird das Display in zwei Zonen aufgeteilt. In z. B. der oberen Zone befinden sich die Verfahrfelder 100, 101 für die Dimensionen 1-3 (z.B. X, Y, Z). In z. B. der unteren Zone befinden sich die Verfahrfelder 102, 103 für die Dimensionen 4-6 z.B. A, B, C. Über die haptischen Marken in Form von Noppen 108, 110, 112 können die beiden Felder 100, 101 und 102, 103 blind unterschieden werden.

Nach dem Berühren der Verfahrfläche 102 aktiviert der Benutzer ein virtuelles Bedienelement 104, das in dem Bereich des Berührungspunktes positioniert wird. Anschließend kann das virtuelle Bedienelement 104 auf dem Touch-Display verschoben werden, um eine Fahrvorgabe zu erzeugen.

Mit einem Multitouch-Display 20 kann der Industrieroboter 12 so in allen 6 Freiheitsgraden simultan verfahren werden. Mit einem Singletouch-Display können die Verfahrfunktionen nur sequentiell verwendet werden.

Beim Verfahren mittels der zuvor erläuterten TouchMotion-Funktion ist das Touch-Display idealerweise kollinear zum Koordinatensystem des Industrieroboters ausgerichtet. In diesem Fall stimmt die Roboterbewegung mit der Fingerbewegung auf dem Touch-Display optimal überein.

Dreht sich jedoch der Bediener mit dem Bediengerät 10 zur Seite weg, so ist diese Übereinstimmung nicht mehr gegeben. Die Bewegungsrichtung des Roboters stimmt dann nicht mehr mit der Bewegungsrichtung des Fingers überein.

Das Koordinatensystem des Touch-Displays muss in diesem Fall wieder zum Koordinatensystem des Roboters rekalibriert werden.

Entsprechend einer eigenerfinderischen Ausführungsform der Erfindung ist dafür auf dem Touch-Display 20 ein spezielles virtuelles Bedienelement 114 mit einem Zeiger 116 vorgesehen.

Das Bedienelement 114 muss zunächst mit einem Finger berührt werden und anschließend muss der Finger unter permanentem Kontakt mit dem Touch-Display parallel zu einer ausgewählten Richtung des Roboterkoordinatensystems, z. B. X-Richtung, gezogen werden. Zur visuellen Unterstützung des Bedieners kann die ausgewählte Richtung des Roboterkoordinatensystems, z. B. X-Richtung, im Arbeitsbereich des Roboters z. B. durch eine Markierung auf der Bodenfläche gekennzeichnet werden. Eine solche ist beispielhaft in Fig. 6 mit "200" gekennzeichnet. Nach dem Abheben des Fingers von dem Touch-Display 20 wird zwischen dem ersten Berührungspunkt und dem Loslasspunkt eine Vektorrichtung berechnet und der Zeiger 116 wird entsprechend der ermittelten Vektorrichtung auf dem Display dargestellt.

Die hier angewendete Rekalibrierungsmethode basiert auf der Annahme, dass in einem Grundzustand der Kalibrierung z. B. die längere Displaykante, die z. B. die X-Achse des Display-Koordinatensystems festlegt, parallel zu einer Hauptachse des RoboterKoordinatensystems, z. B. die X-Achse, ausgerichtet ist. In diesem "eingenordeten" Zustand wird beim touchgesteuerten Handverfahren der Roboter den durch die Fingerbewegung vorgegebenen Richtungen richtig folgen.

Im Fall einer erforderlichen Rekalibrierung ist das Touch-Display um einen gewissen Winkel zur ausgewählten Richtung des Roboterkoordinatensystems, z. B. X-Richtung, verdreht und der Zeiger 166 wird gemäß dem beschriebenen Verfahren zur manuellen Zeigereinstellung parallel zur ausgewählten Richtung des Roboterkoordinatensystems, z. B. X-Richtung, ausgerichtet und steht folglich zur X-Achse des Display-Koordinatensystems in einem bestimmten, gesuchten Winkel. Zwischen der Zeigerrichtung und der Richtung der X-Achse des Display-Koordinatensystems wird ein Winkel berechnet und in eine Rotationsmatrix eingetragen, die fortan alle Bewegungen des Fingers auf dem Touch-Display transformiert, bevor diese als Verfahrvorgabe an die Robotersteuerung gesendet werden. Nach der Rekalibrierung sind beide Koordinatensysteme wieder kollinear zueinander eingestellt, quasi eingenordet.

Dieses Rekalibrierungsverfahren dauert inklusive der Fingerbewegung nur Sekundenbruchteile und ist damit eines der schnellsten manuellen Rekalibriemerfahren. Es werden keinerlei zusätzliche Sensoren wie Magnetometer oder Gyrometer benötigt, wodurch das Verfahren kostengünstig auf jedem Bediengerät realisierbar ist.

Diese Kalibrierungsmethode kann auch für beliebige andere Koordinatensysteme, wie z. B. frei definierbare Frames, verwendet werden.

## Patentansprüche

1. Verfahren zur Bedienung eines Industrieroboters (12) mittels eines Bediengerätes (10), umfassend den Verfahrensschritt des Berührens eines virtuellen Bedienelementes (92, 98, 104, 106) auf einem berührungsempfindlichen von einem Rahmen (34) umgebenen Display (20) eines grafischen Bediener-Interfaces (18), wobei bei Berühren des virtuellen Bedienelementes (92, 98, 104, 106) eine dem Bedienelement zugeordnete Funktion ausgelöst wird, wobei wahlweise Geschwindigkeit oder Strecke einer Auslenkung eines Fingers einer Bedienperson bei Berührung des als definierte Verfahrfläche ausgebildeten virtuellen Bedienelementes (92, 98, 104, 106) des Touch-Displays (20) erfasst wird, und aus der Geschwindigkeit oder der Strecke der Auslenkung ein Steuersignal generiert wird, welches zur Geschwindigkeitsvorgabe oder Positionsvorgabe für Bewegungen des Industrieroboters (12) verwendet wird,
**dadurch gekennzeichnet,**
**dass** im Abstand entlang eines Rahmenabschnitts (36), der als haptische Marke dient, eine erste Verfahrfläche (100) für eine zweidimensionale Positionsvorgabe und innerhalb des entlang des Rahmenabschnitts verlaufenden Abstands eine zweite Verfahrfläche (101) für eine dritte Positionsvorgabe des Industrieroboters definiert werden, wobei der Finger beim Bewegen innerhalb der zweiten Verfahrfläche entlang des Rahmenabschnitts geführt wird, wobei beim Bewegen des Fingers innerhalb der ersten Verfahrfläche (100) der Finger keinen Kontakt zu dem als haptische Marke dienenden Rahmenabschnitt (36) und beim Bewegen des Fingers innerhalb der zweiten Verfahrfläche (101) der Finger spürbaren Kontakt zu dem Rahmenabschnitt (36) hat.

2. Verfahren nach Anspruch 1,
**dadurch gekennzeichnet,**
**dass** die Auslenkung des Fingers auf der definierten Verfahrfläche (100, 102) bzw. eines von dem Finger bewegten virtuellen Bedienelements proportional zu der Verfahrgeschwindigkeit und/oder der Positionsveränderung des Industrieroboters (12) ist.

3. Verfahren nach Anspruch 1 oder 2,
**dadurch gekennzeichnet,**
**dass** der Finger nach dem Berühren der definierten Verfahrfläche (100, 102) bei Überschreiten einer Begrenzung (94) über das gesamte Touch-Display (20) gezogen wird, wodurch Positions- bzw. Fahrvorgaben erzeugt werden.

4. Verfahren nach zumindest einem der vorhergehenden Ansprüche,
**dadurch gekennzeichnet,**
**dass** der Industrieroboter (12) zum Stillstand gelangt, wenn die Bedienperson ihren Finger von dem Touch-Display (20) abhebt.

5. Verfahren nach zumindest einem der vorhergehenden Ansprüche,
**dadurch gekennzeichnet,**
**dass** die Sensibilität einer Reaktion auf eine Bewegung eines Fingers über ein virtuelles Bedienelement (96) wie Schiebe-Regler für die Positionsvorgabe und/oder Geschwindigkeitsvorgabe stufenlos eingestellt wird.

6. Verfahren nach zumindest einem der vorhergehenden Ansprüche,
**dadurch gekennzeichnet,**
**dass** die definierte Verfahrfläche (100, 102) für die zweidimensionale Positionsvorgabe (X- und Y-Koordinaten bzw. A-, B-Richtung) derart auf dem Touch-Display (20) mit Abstand zu dem Displayrand (36) positioniert wird, dass die Verfahrfläche (100, 102) mit einem Finger wie gespreizten Daumen bedienbar ist.

7. Verfahren nach zumindest einem der vorhergehenden Ansprüche,
**dadurch gekennzeichnet,**
**dass** als Touch-Display (20) ein Multitouch-Display oder Singletouch-Display verwendet wird.

8. Verfahren nach zumindest einem der vorhergehenden Ansprüche,
**dadurch gekennzeichnet,**
**dass** der Industrieroboter (12) mittels eines Multitouch-Displays (20) in 6 Freiheitsgraden verfahrbar ist, wobei die Einstellung von Verfahrwegen in X-, Y- und Z-Richtung in einer ersten Zone (100) und die Einstellung einer Orientierung (A, B, C) eines Werkzeugs (91) in einer zweiten Zone (102) des Touch-Displays erfolgt.

## Claims

1. A method for operating an industrial robot (12) with an operating device (10), comprising the method step of touching a virtual operating element (92, 98, 104, 106) on a touch-sensitive display of a graphical operator interface (18) which display (20) is surrounded by a frame (34), wherein when the virtual operating element (92, 98, 104, 106) is touched, a function associated with the operating element is initiated, wherein the speed or the stretch of a deflection of a finger of an operating person when touching the virtual operating element (92, 98, 104, 106) of the touch display (20), which operating element is constructed as a defined moving surface, is detected, and a control signal is generated from the speed or the stretch of the deflection which signal is used for setting the speed or the position for movements of the industrial robot (12),
**characterized in that**
a first moving surface (100) for a two-dimensional setting of position is defined at a distance from and alongside a frame section (36) serving as a haptic mark, and a second moving surface (101) for a third setting of position of the industrial robot is defined inside the distance running along the frame section, wherein the finger is guided during the moving inside the second moving surface along the frame section, wherein during the moving of the finger inside the first moving surface (100) the finger makes no contact with the frame section (36) serving as haptic mark, and during the moving of the finger inside the second moving surface (101 the finger makes a perceptible contact with the frame section (36).

2. The method according to Claim 1,
**characterized in**
**that** the deflection of the finger on the defined moving surface (100, 102) or of a virtual operating element moved by the finger is proportional to the moving speed and/or the change of position of the industrial robot (12).

3. The method according to Claim 1 or 2,
**characterized in**
**that** the finger, after having touched the defined moving surface (100, 102) and having exceeded a boundary (94), is drawn over the entire touch display (20), which produces settings of position and of moving.

4. The method according to at least one of the preceding claims,
**characterized in**
**that** the industrial robot (12) comes to a standstill when the operating person lifts his finger off the touch display (20).

5. The method according to at least one of the preceding claims,
**characterized in**
**that** the sensibility of a reaction to a movement of a finger over a virtual operating element (96) such as a slide regulator is continuously adjusted for the position setting and/or the speed setting.

6. The method according to at least one of the preceding claims,
**characterized in**
**that** the defined moving surface (100, 102) for the two-dimensional position setting (X and Y coordinates and/or A, B direction) are positioned in such a manner on the touch display (20) with a distance to the display edge (36) that the moving surface (100, 102) can be operated by a finger such as a spread thumb.

7. The method according to at least one of the preceding claims,
**characterized in**
**that** a multi-touch display or single-touch display is used as a touch display (20).

8. The method according to at least one of the preceding claims,
**characterized in**
**that** the industrial robot (12) can be moved by a multi-touch display (20) in 6 degrees of freedom, wherein the adjustment of moving paths in the X, Y and Z directions takes place in a first zone (100) and the adjustment of an orientation (A, B, C) of a tool (91) takes place in a second zone (102) of the touch display.

## Revendications

1. Procédé de commande d'un robot industriel (12) au moyen d'un appareil de commande (10), comprenant l'étape de procédé consistant à toucher un élément de commande virtuel (92, 98, 104, 106) sur un écran tactile (20) d'une interface utilisateur graphique (18), ledit écran étant entouré par un cadre (34), sachant qu'en touchant l'élément de commande virtuel (92, 98, 104, 106) est déclenchée une fonction affectée à l'élément de commande, qu'au choix est saisie la vitesse ou la trajectoire d'une déviation d'un doigt d'un opérateur en cas de contact avec l'élément de commande virtuel (92, 98, 104, 106) de l'écran tactile (20), ledit élément étant conçu en tant que surface de déplacement définie, et qu'à partir de la vitesse ou de la trajectoire de la déviation est généré un signal de commande qui est utilisé en tant que référence de vitesse ou référence de position pour des mouvements du robot industriel (12),
**caractérisé en ce**
**que** dans l'espace le long d'un segment de cadre (36) servant de marque haptique est définie une première surface de déplacement (100) pour une référence de position bidimensionnelle et à l'intérieur de l'espace s'étendant le long du segment de cadre est définie une deuxième surface de déplacement (101) pour une troisième référence de position du robot industriel, sachant que le doigt en mouvement à l'intérieur de la deuxième surface de déplacement est guidé le long du segment de cadre, que le doigt en mouvement à l'intérieur de la première surface de déplacement (100) n'a aucun contact avec le segment de cadre (36) servant de marque haptique, et que le doigt en mouvement à l'intérieur de la deuxième surface de déplacement (101) a un contact perceptible avec le segment de cadre (36).

2. Procédé selon la revendication 1,
**caractérisé en ce**
**que** la déviation du doigt sur la surface de déplacement (100, 102) définie et/ou la déviation d'un élément de commande virtuel mû par le doigt est proportionnelle à la vitesse de déplacement et/ou au changement de position du robot industriel (12).

3. Procédé selon la revendication 1 ou 2,
**caractérisé en ce**
**qu'**après contact avec la surface de déplacement (100, 102) définie, le doigt est glissé sur la totalité de l'écran tactile (20) en dépassant une délimitation (94), ce qui génère des références de position et/ou de déplacement.

4. Procédé selon au moins une des revendications précédentes,
**caractérisé en ce**
**que** le robot industriel (12) s'immobilise quand l'opérateur ôte son doigt de l'écran tactile (20).

5. Procédé selon au moins une des revendications précédentes,
**caractérisé en ce**
**que** la sensibilité d'une réaction à un mouvement d'un doigt sur un élément de commande virtuel (96), tel qu'un régulateur à coulisse, pour la référence de position et/ou la référence de vitesse est réglée en continu.

6. Procédé selon au moins une des revendications précédentes,
**caractérisé en ce**
**que** la surface de déplacement (100, 102) définie pour la référence de position bidimensionnelle (coordonnées X et Y ou direction A, B) est positionnée sur l'écran tactile (20) à distance du bord d'écran (36) de manière telle que la surface de déplacement (100, 102) peut être activée avec un doigt, tel qu'un pouce écarté.

7. Procédé selon au moins une des revendications précédentes,
**caractérisé en ce**
**qu'**en tant qu'écran tactile (20) est utilisé un écran multipoint ou un écran monopoint.

8. Procédé selon au moins une des revendications précédentes,
**caractérisé en ce**
**que** le robot industriel (12) est manoeuvrable au moyen d'un écran multipoint (20) selon 6 degrés de liberté, sachant que le réglage de déplacements dans les directions X, Y et Z s'effectue dans une première zone (100) et le réglage d'une orientation (A, B, C) d'un outil (91) s'effectue dans une deuxième zone (102) de l'écran tactile.
